# EUROPEAN PATENT SPECIFICATION

(11) **EP 2 105 609 B1**
(45) Date of publication and mention of the grant of the patent: **03.05.2017**
(21) Application number: 08015978.3
(22) Date of filing: 10.09.2008
(51) Int. Cl.: F03D 7/02, F03D 17/00, F03D 1/06, F16B 31/02, F16L 23/036

(54) **Flange joint for blade sections of a wind turbine with load sensor on the bolts**
Flanschverbindung für Schaufelblattabschnitte einer Windturbine mit Kraftaufnehmer an den Bolzen
Joint à bride pour sections de pale d'éolienne avec transducteur de force sur les boulons

(30) Priority: 14.09.2007 ES 200702442
(43) Date of publication of application: 30.09.2009
(73) Proprietor: Gamesa Innovation & Technology, S.L., 31621 Sarriguren (ES)
(72) Inventor: Pedersen, Bent Herso, 8600 Silkeborg (DK); Arocena de la Rua, Ion, 31621 Sarriguren (Navarra) (ES); Rodriguez Sola, Rubén, 31621 Sarriguren (Navarra) (ES); Sanz Pascual, Eneko, 31621 Sarriguren (Navarra) (ES); Savii, Hely Ricardo, 31621 Sarriguren (Navarra) (ES)

(56) References cited:
- WO-A1-2006/056584
- WO-A2-2008/014935
- US-A1- 2004 151 577
- US-A1- 2005 276 696
- US-B1- 6 354 152

## Description

### Field of the invention

The invention consists of sensors in the blade joining points for the purpose of permanently monitoring these points. The measurements are used to complement the control systems ① reducing the loads and controlling the forces throughout the life of the blade, ② detecting damages and stopping the machine if necessary ③ and obtaining an optimised design for real loads.

This system is applicable to any mechanical joining system with fastening components and is especially applicable to a wind turbine blade made up of several sections.

### Background of the invention

The blade that will be sensorised is a transversely subdivided blade, referred to in patent P200500740 whose applicant is the holder or in WO 2006/056584 A1. On the other hand, the use of sensors located in wind power components is mentioned in document WO 2005/010358 which includes a wind turbine with a sensorised main shaft whose control reduces the effects of the loads. Sensorisation is applied in order to understand the forces caused by the rotor in the main shaft and to therefore regulate the pitch or variable angle of the wind turbine blades.

Document WO 01/33075 describes sensorised blades that control the pitch or rotation of the blades, keeping the mechanical loads under certain working limits.

The same applicant of this invention holds patent P 200700444 which includes a sensorised gearbox that has a number of sensors assembled in a set of fixed parts, measuring the loads in the rotating shaft and the axial and radial forces derived from the operation of the wind turbine.

None of the patents mentioned sensorise the joint of a longitudinal structure that is internal, resistant and equipped with connection means at its end sections.

### Description of the invention

The object of the invention is to have sensors in a transversely subdivided blade to measure the forces transmitted through the transverse joint of the blade.

The invention also aims to detect damage in the joining elements which results in the stopping of the machine (if necessary).

Another purpose of the invention is to obtain a precise measurement of the loads experienced by the blade for the control system and its management for different operating modes for the pitch and rotation control, in order to reduce the loads in the wind turbine.

Another object of the invention is the experimental determination of the load range supported by the joining elements; to experimentally validate the design hypothesis and to allow the number or design of the joining elements to be optimised.

Yet another object of the invention is the determination of the number of sensors and the places where they are positioned to obtain the axial forces of the joint pin, instantly and simultaneously, managing these data at all times.

Finally, the invention aims to select the type of sensor that is the most suitable with respect to ultrasound sensors and load cells.

From all the information described above, one can see that the advantages provided by the sensors referred to in the invention are:
- Load reduction and weight reduction.
- Optimisation and reduction of energy costs.
- Avoids preventative maintenance.
- Reduction of catastrophic failure.
- Knowledge of the real loads in the blade joint.
- Adjusted design hypotheses based on real loads.
- Design optimised for real loads.
- Decrease in the probability of failure of the blade and its joint.

### Brief description of the figures

Figure 1 is a view of the end of a blade section showing the connection means.
Figure 2 is a view of the blade joined by means of the connection bolts.
Figure 3 shows certain details of a metal joint insert, its assembly with the composite material in the blade laminate and the assembly between metal inserts by means of joint pins.
Figure 4 is a general view of a blade divided into two parts, with the transverse parts attached and with the controlled transmission system.
Figure 5 shows the detail of an ultrasound sensor in the pin.
Figure 6 shows the detail of a load cell in the pin.
Figure 7 shows the detail of a load cell between the front faces of two opposite inserts.

### Description of the preferred installation

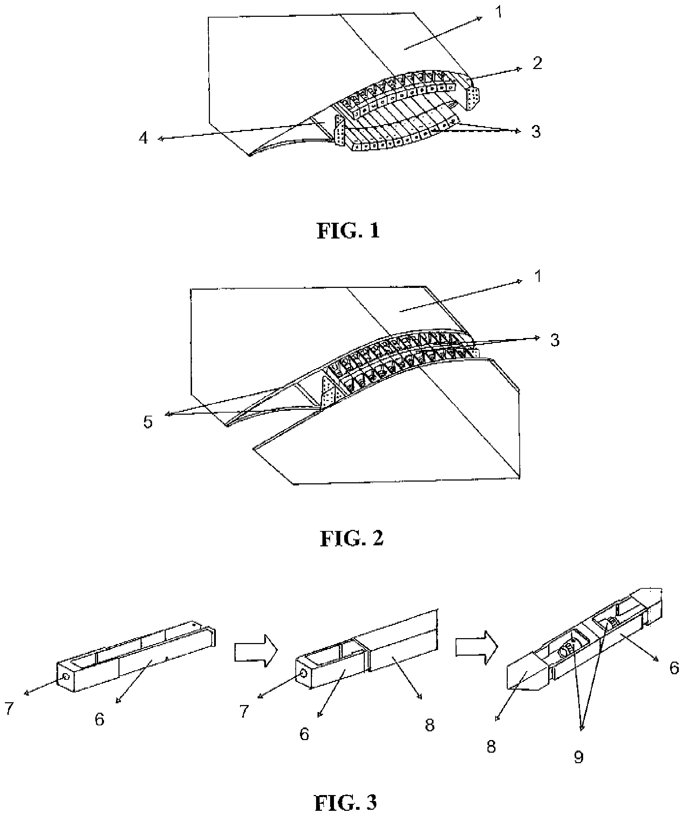

In figure 1, one can see part of a transversely subdivided blade (1) which shows its internal longitudinal structure (2) and that it is equipped with connection means (3) in its end sections. These connection means (3) are integrated in the structurally resistant part corresponding to the beam (4). When two end sections are joined, they give continuity to the blade (1), leaving only the connection means (3) without shell covering (5). These spaces are later covered with a fairing (5b) levelling the outer surface of the blade (1).

Figure 3 shows the successive steps to prepare the connection means. First the metal insert (6) is prepared that has an axial drill (7) facing another insert in one of its ends. Later the metal insert (6) is shown joined, by adhesive, to a machined housing in the beam or resistant internal longitudinal structure (8). Finally, two metal inserts (6) are depicted with their axial drills (7) facing to receive pins and nuts (9) that make up the joining points. The aforementioned joint pins (9) work by traction.

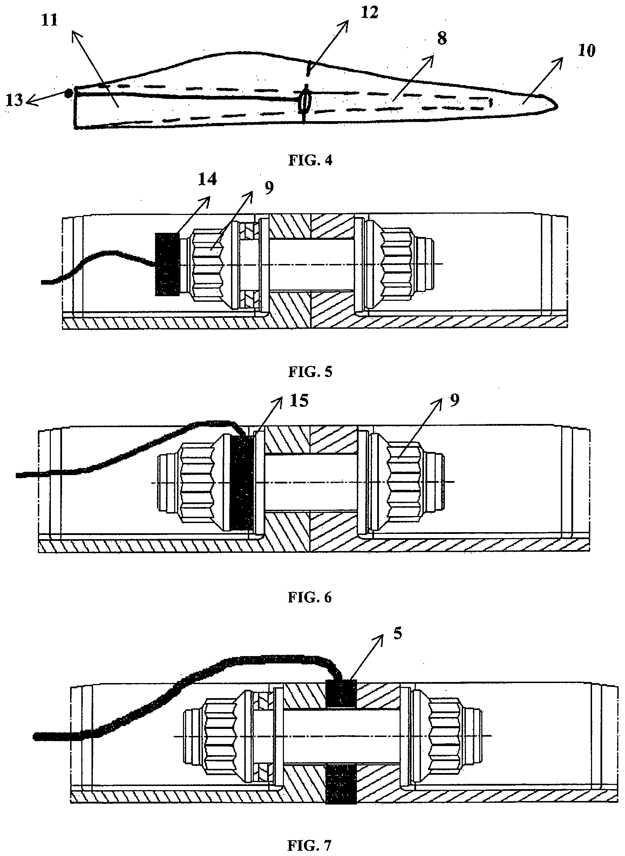

All the induced loads in the blade tip modules (10) are transmitted through the transverse subdivision (12) of the blade (1). This subdivision is made up of a small number of joining elements (3) so that the load ends up passing only through the joint pins (9). In this way one may obtain the exact total load that goes through the subdivision and may get an excellent estimator of the load transmitted by the blade to the wind turbine. As shown in figure 4, monitoring the joining points corresponding to the transverse subdivision (12) with different sensors, the measurements of the sensors can be sent up to the root of the blade (11) using the inside of the beam (8). Finally, the measurements will arrive at the control point (12) in the hub (not shown in the figure).

An ultrasound sensor (14) is used in figure 5; it sends an impulse that bounces off the end of the pin (9). The sensor measures the time that passes between the emission and reception of the impulse and transforms it into a preload measurement of the bolt that is sent to the control system (12). The ultrasound sensor (14) is at the end of the bolt (9) so that its signal can move lengthwise without any difficulty.

A load cell (15) is used in figure 6; it consists of a metal washer from which its strain is measured. Later, the measurement of the load is transformed to that which the bolt is subject to and the result is sent to the control system (12). The location of the sensor (15) is such that it is easy to replace in case of damage.

In a second installation shown in figure 7, the load cell (15) is between the two inserts to be assembled.

## Claims

1. Sensorised blade joint which joint between sections of the blade (1) is carried out by multiple connection means (3) integrated in the blade in the structurally resistant part corresponding to the beam (4) and which comprise metal inserts (6) joined by adhesive to a machined housing located in a beam of the blade, the facing metal inserts (6) are connected by the pins and the nuts (9) across axial drills (7), and making up the joint of the sections covered by a fairing and using a series of sensors (14, 15) to control the load of the bolts (9) during the life of the blade, **characterised in that**:
**a.-** the sensors (14, 15) are in at least one of a multiple connection means (3) in a transverse joint section
**b.-** the signals measured by the sensors are transmitted to a control system (12) that is or is not located in the blade (1) that controls the forces exerted on the joint
**c.-** the signals transmitted to the control system (12) are used to detect possible damages in the connections
**d.-** the signals transmitted to the control system (12) are used to control the loads transmitted to the wind turbine
**e.-** the signals transmitted to the control system (12) are used to store the load range,
optimising the design with the real loads obtained.

2. Sensorised blade joint, according to the first claim, **characterised in that** the sensors include at least one ultrasound sensor at the end of the joint pin aligned with the resistant material that forms the insert.

3. Sensorised blade joint, according to the first claim, **characterised in that** the sensors include at least one load cell located in a part near the pin or between the walls of the two facing inserts.

4. Sensorised blade joint, according to the first claim, **characterised in that** the control system is located in the hub away from the distortions produced by blade rotation acceleration.

5. Sensorised blade joint, according to the previous claim, **characterised in that** the control system is supplied with the measurements of the sensors leading their signal through the inside of the beam which forms the blade.

## Patentansprüche

1. Sensorierte Rotorblattverbindung, deren Verbindung zwischen den Abschnitten des Rotorblatts (1) durch mehrere Verbindungsmittel (3) ausgeführt ist, die im Rotorblatt in dem strukturell widerstandsfähigen, zum Träger (4) gehörigen Teil integriert sind und Metalleinlagen (6) enthalten, die mit Kleber an einem bearbeiteten Gehäuse verbunden sind, das sich an einem Träger des Rotorblatts befindet, wobei die einander gegenüber liegenden Metalleinlagen (6) durch die Stifte und Muttern (9) über die Axialbohrlöcher (7) verbunden sind und die Verbindung der mit einer Verkleidung bedeckten Abschnitte darstellen, und eine Reihe von Sensoren (14, 15) verwendet wird, mit denen die Belastung der Bolzen (9) während der Lebensdauer des Rotorblatts kontrolliert wird, **gekennzeichnet dadurch, dass**:
**a.** die Sensoren (14, 15) in mindestens einem von mehreren Verbindungsmitteln (3) in einem diagonalen Verbindungsabschnitt sind
**b.** die von den Sensoren gemessenen Signale an ein Steuerungssystem (12) übertragen werden, das sich auf dem Rotorblatt (1) befindet oder nicht und das die auf die Verbindung ausgeübten Kräfte kontrolliert
**c.** die an das Steuerungssystem (12) übertragenen Signale dafür benutzt werden, mögliche Schäden an den Verbindungen festzustellen
**d.** die an das Steuerungssystem (12) übertragenen Signale werden benutzt, um die auf die Windenergieanlage übertragenen Lasten zu kontrollieren
**e.** die an das Steuerungssystem (12) übertragenen Signale dafür benutzt werden, die Belastungsreichweite zu speichern und Design aufgrund der erhaltenen tatsächlichen Lasten zu verbessern.

2. Sensorierte Rotorblattverbindung gemäß Anspruch 1, **gekennzeichnet dadurch, dass** sich unter den Sensoren mindestens ein Ultraschallsensor am Ende des Verbindungsstifts und ausgerichtet mit dem widerstandsfähigen Material der Einlage befindet.

3. Sensorierte Rotorblattverbindung gemäß Anspruch 1, **gekennzeichnet dadurch, dass** sich unter den Sensoren mindestens eine Lastzelle an einem Teil in der Nähe des Stifts oder zwischen den Wänden der einander gegenüber liegenden Einlagen befindet.

4. Sensorierte Rotorblattverbindung gemäß Anspruch 1, **gekennzeichnet dadurch, dass** sich das Steuerungssystem in der Nabe fern von den durch die Beschleunigung der Rotorblattrotation entstehenden Verzerrungen befindet.

5. Sensorierte Rotorblattverbindung gemäß dem vorigen Anspruch, **gekennzeichnet dadurch, dass** das Steuerungssystem mit den Messungen der Sensoren versorgt wird und deren Signal durch die Innenseite des Trägers, der das Rotorblatt bildet, weiterleitet.

## Revendications

1. Raccord de pale à capteurs dont le raccord entre les sections de la pale (1) est assuré par plusieurs moyens de raccordement (3) intégrés à la pale dans la pièce structurellement résistante correspondant à la poutre (4) et qui comprennent des inserts métalliques (6) assemblés par adhésif à un logement usiné situé dans une poutre de la pale, les inserts métalliques (6) situés en regard étant raccordés par les broches et écrous (9) à travers les orifices axiaux (7), et constituant le raccord des sections couvertes par une plaque et utilisant une série de capteurs (14, 15) pour contrôler la charge des boulons (9) pendant la durée de vie de la pale, **caractérisé en ce que** :
**a.-** les capteurs (14, 15) sont dans au moins l'un des moyens de raccordement (3) dans une section transversale du raccord
**b.-** les signaux mesurés par les capteurs sont transmis à un système de commande (12) qui est ou non situé sur la pale (1) qui contrôle les forces exercées sur le raccord
**c.-** les signaux transmis au système de commande (12) sont utilisés pour détecter d'éventuels dommages sur les raccordements
**d.-** les signaux transmis au système de commande (12) sont utilisés pour contrôler les charges transmises à l'aérogénérateur
**e.-** les signaux transmis au système de commande (12) sont utilisés pour mémoriser l'intervalle de charge, la conception étant optimavec les charges réelles obtenues.

2. Raccord de pale à capteurs, selon la première revendication, **caractérisé en ce que** les capteurs comprennent au moins un capteur ultrasonore à l'extrémité de la broche du raccord aligné avec le matériau résistant formant l'insert.

3. Raccord de pale à capteurs, selon la première revendication, **caractérisé en ce que** les capteurs comprennent au moins une cellule de charge située sur une pièce près de la broche ou entre les parois des deux inserts en regard.

4. Raccord de pale à capteurs, selon la première revendication, **caractérisé en ce que** le système de commande est situé dans le moyeu à l'écart des distorsions produites par l'accélération de la pale en rotation.

5. Raccord de pale à capteurs, selon la revendication précédente, **caractérisé en ce que** le système de commande est alimenté par les mesures des capteurs qui transmettent leurs signaux à travers l'intérieur de la poutre qui forme la pale.
